(19) Europäisches Patentamt
European Patent Office
Office européen des brevets

(11) **EP 4 376 128 A1**

(12) **EUROPEAN PATENT APPLICATION**

(43) Date of publication:
**29.05.2024 Bulletin 2024/22**

(21) Application number: **23206078.0**

(22) Date of filing: **26.10.2023**

(51) International Patent Classification (IPC):
*H01M 4/62* (2006.01)    *H01M 10/0525* (2010.01)

(52) Cooperative Patent Classification (CPC):
**H01M 4/622; H01M 4/621; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.10.2022 KR 20220141785**

(71) Applicant: **Korea Kumho Petrochemical Co., Ltd.
Seoul 04542 (KR)**

(72) Inventors:
• **KIM, Jeong Geun
34402 Daejeon (KR)**
• **CHOI, Young Gil
34675 Daejeon (KR)**
• **LEE, Yong Jun
30153 Sejong-si (KR)**

(74) Representative: **Beck & Rössig
European Patent Attorneys
Denninger Str. 169
81925 München (DE)**

(54) **BINDER FOR ANODE OF SECONDARY BETTERY, ANODE MIXTURE FOR SECONDARY BATTERY, ANODE AND SECONDARY BATTERY INCLUDING THE SAME**

(57)    Disclosed are a binder for a secondary battery anode including styrene-butadiene-based rubber with a core-shell structure and nitrile-butadiene-based rubber with a gel content of 15% or more, wherein a weight ratio of the styrene-butadiene-based rubber and the nitrile-butadiene-based rubber is 65:35 to 99: 1, an anode mixture for a secondary battery, and an anode and a secondary battery including the same.

EP 4 376 128 A1

**Description**

CROSS-REFERENCE TO RELATED APPLICATION

This application claims priority to and the benefit of Korean Patent Application No. 2022-0141785, filed on October 28, 2022, the disclosure of which is incorporated herein by reference in its entirety.

BACKGROUND

**1. Field of the Invention**

The present invention relates to a binder for a secondary battery anode, an anode mixture for a secondary battery, and an anode and secondary battery including the same.

**2. Discussion of Related Art**

Secondary batteries capable of charging and discharging are used not only in small electronic devices such as mobile phones and laptop computers, but also in large vehicles such as hybrid vehicles and electric vehicles. Accordingly, development of secondary batteries having higher stability and energy density is actively progressing.

An existing lithium ion battery is composed of a carbon-based anode, an electrolyte including an organic solvent, and a lithium oxide cathode, wherein lithium ions are released from the cathode and move to the carbon-based anode through the electrolyte during charging by using chemical reactions occurring at the cathode and the anode, and discharging proceeds in reverse to the charging process. Accordingly, the binder is mainly a polymer material that does not react with lithium and can stably fix the electrode active material to the electrode current collector, and in particular, polyacrylic acid (PAA) and carboxymethyl cellulose (CMC) are commonly used.

However, recently, in the lithium-ion battery market, new electrode active materials are being researched and developed with the goal of high capacity and high output, and among them, silicon-based electrode active materials are attracting attention. This silicon-based electrode active material can achieve a capacity of about 4,200 mAh/g, which is 10 times or more higher than that of natural graphite, but it is known that, as charging and discharging are repeated, substitution and recapture of lithium ions occur, and approximately 300 to 400-fold volume expansion occurs, causing problems such as a reduced binding force to the binder, poor contact with the electrode, and deteriorated battery cycle characteristics.

Because of this, it is difficult to use pure silicon metal as an anode active material, and currently, nano silicon or silicon oxide is mixed with graphite and used.

Therefore, in order to implement secondary batteries with high capacity, high performance and a long life, the development of a binder for anodes that can maintain adhesive strength and resilience even when shrinking and expanding by 200% or more is required.

SUMMARY OF THE INVENTION

One of the many purposes of the present invention is to provide a binder for a secondary battery anode that may implement a secondary battery with high capacity, high performance, and a long life.

According to one aspect of the present invention, the present invention provides a binder for a secondary battery anode including styrene-butadiene-based rubber with a core-shell structure and nitrile-butadiene-based rubber with a gel content of 15% or more, wherein a weight ratio of the styrene-butadiene-based rubber and the nitrile-butadiene-based rubber is 65:35 to 99:1.

In one preferred embodiment, a weight ratio of the styrene-butadiene-based rubber and the nitrile-butadiene-based rubber may be 75:25 to 85:15.

In one preferred embodiment, the core of the styrene-butadiene-based rubber may include (a1) 5 to 15% by weight of a conjugated diene-based monomer, (a2) 5 to 15% by weight of an aromatic vinyl-based monomer, (a3) 0 to 20% by weight of an alkyl ester-based monomer, and (a4) 0.1 to 20% by weight of an ethylenically unsaturated acid monomer including itaconic acid, based on 100% by weight of the styrene-butadiene-based rubber.

In one preferred embodiment, the shell of the styrene-butadiene-based rubber may include (b1) 10 to 40% by weight of a conjugated diene-based monomer, (b2) 20 to 40% by weight of an aromatic vinyl-based monomer, (b3) 0.1 to 30% by weight of an alkyl ester-based monomer, and (b4) 0 to 20% by weight of an ethylenically unsaturated acid monomer, based on 100% by weight of the styrene-butadiene-based rubber.

In one preferred embodiment, the nitrile-butadiene-based rubber may include 60 to 75% by weight of a conjugated diene-based monomer, 20 to 40% by weight of an ethylenically unsaturated nitrile monomer, 0 to 10% by weight of an alkyl ester-based monomer, and 0 to 10% by weight of an ethylenically unsaturated acid monomer, based on 100% by weight of the nitrile-butadiene-based rubber.

In one preferred embodiment, a gel content of the nitrile-butadiene-based rubber may be 50% or more.

In one preferred embodiment, a glass transition temperature (Tg) of the nitrile-butadiene-based rubber may be 20 °C or less.

In one preferred embodiment, the Tg of the nitrile-butadiene-based rubber may be - 10 °C or less.

In one preferred embodiment, the binder for a secondary battery anode may further include a cellulose-based water-soluble polymer.

In one preferred embodiment, the cellulose-based water-soluble polymer may be one or more selected from the group consisting of carboxymethylcellulose and salts thereof, methylcellulose and salts thereof, ethylcellulose and salts thereof, and hydroxyalkylcellulose and salts thereof.

In one preferred embodiment, a weight ratio of the cellulose-based water-soluble polymer may be 0.5 to 2 based on the total weight of the styrene-butadiene-based rubber and the nitrile-butadiene-based rubber.

In one preferred embodiment, the conjugated diene-based monomer may be one or more selected from the group consisting of 1,3-butadiene, 2,3-dimethyl-1,3-butadiene, 2-ethyl-1,3-butadiene, and 1,3-pentadiene.

In one preferred embodiment, the aromatic vinyl-based monomer may be one or more selected from the group consisting of styrene, $\alpha$-methylstyrene, 2-methylstyrene, 3-methylstyrene, 4-methylstyrene, 2,4-dimethylstyrene, 2,4-diisopropylstyrene, 4-propylstyrene, 4-cyclohexylstyrene, 4-(p-methylphenyl)styrene, 5-tert-butyl-2-methylstyrene, tert-butoxystyrene, 2-tert-butylstyrene, 3-tert-butylstyrene, 4-tert-butylstyrene, N,N-dimethylaminoethylstyrene, 1-vinyl-5-hexylnaphthalene, 1-vinylnaphthalene, divinylnaphthalene, divinylbenzene, trivinylbenzene, vinylbenzyldimethylamine, (4-vinylbenzyl)dimethylaminoethyl ether, vinylpyridine, vinylxylene, diphenylethylene, and halogen-substituted styrene.

In one preferred embodiment, the ethylenically unsaturated acid monomer may be one or more selected from the group consisting of acrylic acid, methacrylic acid, itaconic acid, maleic acid, fumaric acid, maleic anhydride, citraconic anhydride, styrene sulfonic acid, monobutyl fumarate, monobutyl maleate, and mono-2-hydroxypropyl maleate.

In one preferred embodiment, the alkyl ester-based monomer may be one or more selected from the group consisting of methyl methacrylate, ethyl methacrylate, butyl methacrylate, methyl acrylate, ethyl acrylate, and butyl acrylate.

In one preferred embodiment, the ethylenically unsaturated nitrile monomer may be one or more selected from the group consisting of acrylonitrile, methacrylonitrile, fumaronitrile, $\alpha$-chloronitrile, and $\alpha$-cyano ethyl acrylonitrile.

According to another aspect of the present invention, an anode mixture for a secondary battery including the binder for a secondary battery anode and an anode active material is provided.

In one preferred embodiment, the anode active material may be one or more selected from the group consisting of silicon, silicon oxide represented by the formula $SiO_x$ ($0.5 \leq x \leq 1.5$), silicon-based alloys, and mixtures of these with carbon-based materials.

According to still another aspect of the present invention, an anode including an anode mixture layer composed of the anode mixture, and an anode current collector layer is provided.

According to yet another aspect of the present invention, a secondary battery including the anode, a cathode, and an electrolyte layer is provided.

DETAILED DESCRIPTION OF EXEMPLARY EMBODIMENTS

Hereinafter, one aspect of the present specification will be described. However, the description of the present specification may be implemented in several different forms, and thus is not limited to the embodiments described herein. In order to clearly illustrate the present invention, parts irrelevant to the description are omitted.

Throughout the specification, when a part is "connected" to another part, this includes not only the case where it is "directly connected" but also the case where it is "indirectly connected" with another member interposed therebetween. In addition, when a part is said to "include" a component, this means that other components may be further included, not excluded, unless specifically stated otherwise.

When a range of numerical values is recited herein, the values have the precision of the significant figures provided in accordance with the standard rules in chemistry for significant figures, unless a specific range is otherwise stated. For example, 10 includes the range of 5.0 to 14.9, and 10.0 includes the range of 9.50 to 10.49.

**Binder for secondary battery anode**

One aspect of the present invention provides a binder for a secondary battery anode including styrene-butadiene-based rubber with a core-shell structure and nitrile-butadiene-based rubber.

A weight ratio of the styrene-butadiene-based rubber and the nitrile-butadiene-based rubber may be 65:35 to 99:1, preferably 70:30 to 90:10, and more preferably 75:25 to 85:15. When the weight ratio of the styrene-butadiene-based rubber and the nitrile-butadiene-based rubber is outside the above range, the resilience in the secondary battery electrolyte may decrease, or denaturation by the secondary battery electrolyte may become severe, resulting in reduced adhesive strength or charge/discharge efficiency.

Hereinafter, the styrene-butadiene-based rubber with the core-shell structure and the nitrile-butadiene-based rubber will be described in detail.

Styrene-butadiene-based rubber

The core of the styrene-butadiene-based rubber has elasticity and provides excellent resilience in the electrolyte of a secondary battery.

According to one example, the core of the styrene-butadiene-based rubber may include (a1) a conjugated diene-based monomer, (a2) an aromatic vinyl-based monomer, (a3) an alkyl ester-based monomer, and (a4) an ethylenically unsaturated acid monomer including itaconic acid.

The conjugated diene-based monomer (a1) may be one or more selected from the group consisting of 1,3-butadiene, 2,3-dimethyl-1,3-butadiene, 2-ethyl-1,3-butadiene, and 1,3-pentadiene, but is not limited thereto.

A content of the conjugated diene-based monomer (a1) may be 5 to 15% by weight based on 100% by weight of the styrene-butadiene-based rubber. For example, the content may be 5.0% by weight, 5.5% by weight, 6.0% by weight, 6.5% by weight, 7.0% by weight, 7.5% by weight, 8.0% by weight, 8.5% by weight, 9.0% by weight, 9.5% by weight, 10.0% by weight, 10.5% by weight, 11.0% by weight, 11.5% by weight, 12.0% by weight, 12.5% by weight, 13.0% by weight, 13.5% by weight, 14.0% by weight, 14.5% by weight, 15.0% by weight, or a value between two of these values. When the content of the conjugated diene-based monomer (a1) satisfies the above range, a characteristic of volume expansion at high pH (for example, pH 9 or more) is exhibited, and excellent binder stability can be secured in the range of pH 5 or more and pH 8 or less.

The aromatic vinyl-based monomer (a2) may be one or more selected from the group consisting of styrene, $\alpha$-methylstyrene, 2-methylstyrene, 3-methylstyrene, 4-methylstyrene, 2,4-dimethylstyrene, 2,4-diisopropylstyrene, 4-propylstyrene, 4-cyclohexylstyrene, 4-(p-methylphenyl)styrene, 5-tert-butyl-2-methylstyrene, tert-butoxystyrene, 2-tert-butylstyrene, 3-tert-butylstyrene, 4-tert-butylstyrene, N,N-dimethylaminoethylstyrene, 1-vinyl-5-hexylnaphthalene, 1-vinylnaphthalene, divinylnaphthalene, divinylbenzene, trivinylbenzene, vinylbenzyldimethylamine, (4-vinylbenzyl)dimethylaminoethyl ether, vinylpyridine, vinylxylene, diphenylethylene, and halogen-substituted styrene, but is not limited thereto.

A content of the aromatic vinyl-based monomer (a2) may be 5 to 15% by weight based on 100% by weight of the styrene-butadiene-based rubber. For example, the content may be 5.0% by weight, 5.5% by weight, 6.0% by weight, 6.5% by weight, 7.0% by weight, 7.5% by weight, 8.0% by weight, 8.5% by weight, 9.0% by weight, 9.5% by weight, 10.0% by weight, 10.5% by weight, 11.0% by weight, 11.5% by weight, 12.0% by weight, 12.5% by weight, 13.0% by weight, 13.5% by weight, 14.0% by weight, 14.5% by weight, 15.0% by weight, or a value between two of these values. When the content of the aromatic vinyl-based monomer (a2) satisfies the above range, a characteristic of volume expansion at high pH (for example, pH 9 or more) is exhibited, and excellent binder stability can be secured in the range of pH 5 or more and pH 8 or less.

The alkyl ester-based monomer (a3) may be one or more selected from the group consisting of methyl methacrylate, ethyl methacrylate, butyl methacrylate, methyl acrylate, ethyl acrylate, and butyl acrylate, but is not limited thereto.

A content of the alkyl ester-based monomer (a3) may be 0 to 20% by weight based on 100% by weight of the styrene-butadiene-based rubber. For example, the content may be 0% by weight, 0.1% by weight, 0.2% by weight, 0.3% by weight, 0.4% by weight, 0.5% by weight, 0.6% by weight, 0.7% by weight, 0.8% by weight, 0.9% by weight, 1% by weight, 2% by weight, 3% by weight, 4% by weight, 5% by weight, 6% by weight, 7% by weight, 8% by weight, 9% by weight, 10% by weight, 11% by weight, 12% by weight, 13% by weight, 14% by weight, 15% by weight, 16% by weight, 17% by weight, 18% by weight, 19% by weight, 20% by weight, or a value between two of these values. When the content of the alkyl ester-based monomer (a3) satisfies the above range, a characteristic of volume expansion at high pH (for example, pH 9 or more) is exhibited, and excellent binder stability can be secured in the range of pH 5 or more and pH 8 or less.

The ethylenically unsaturated acid monomer (a4) may include itaconic acid, and may further include one or more selected from the group consisting of acrylic acid, methacrylic acid, maleic acid, fumaric acid, maleic anhydride, citraconic anhydride, styrene sulfonic acid, monobutyl fumarate, monobutyl maleate, and mono-2-hydroxypropyl maleate, but is not limited thereto.

A content of the ethylenically unsaturated acid monomer (a4) may be 0.1 to 20% by weight based on 100% by weight of the styrene-butadiene-based rubber. For example, the content may be 0.1% by weight, 0.2% by weight, 0.3% by weight, 0.4% by weight, 0.5% by weight, 0.6% by weight, 0.7% by weight, 0.8% by weight, 0.9% by weight, 1% by weight, 2% by weight, 3% by weight, 4% by weight, 5% by weight, 6% by weight, 7% by weight, 8% by weight, 9% by weight, 10% by weight, 11% by weight, 12% by weight, 13% by weight, 14% by weight, 15% by weight, 16% by weight, 17% by weight, 18% by weight, 19% by weight, 20% by weight, or a value between two of these values. When the contents of the acryl-based monomer (a3) and the ethylenically unsaturated acid monomer (a4) satisfy the above ranges, a characteristic of volume expansion at high pH (for example, pH 9 or more) is exhibited, and excellent binder stability can be secured in the range of pH 5 or more and pH 8 or less.

The shell of the styrene-butadiene-based rubber is hydrophilic and provides strong adhesive strength through hydrogen bonding.

According to one example, the shell of the styrene-butadiene-based rubber may include (b1) a conjugated diene-based monomer, (b2) an aromatic vinyl-based monomer, (b3) an alkyl ester-based monomer, and (b4) an ethylenically unsaturated acid monomer.

The conjugated diene-based monomer (b1) may be one or more selected from the group consisting of 1,3-butadiene, 2,3-dimethyl-1,3-butadiene, 2-ethyl-1,3-butadiene, and 1,3-pentadiene, but is not limited thereto.

A content of the conjugated diene-based monomer (b1) may be 10 to 40% by weight based on 100% by weight of the styrene-butadiene-based rubber. For example, the content may be 10% by weight, 11% by weight, 12% by weight, 13% by weight, 14% by weight, 15% by weight, 16% by weight, 17% by weight, 18% by weight, 19% by weight, 20% by weight, 21% by weight, 22% by weight, 23% by weight, 24% by weight, 25% by weight, 26% by weight, 27% by weight, 28% by weight, 29% by weight, 30% by weight, 31% by weight, 32% by weight, 33% by weight, 34% by weight, 35% by weight, 36% by weight, 37% by weight, 38% by weight, 39% by weight, 40% by weight, or a value between two of these values. When the content of the conjugated diene-based monomer (b1) satisfies the above range, it is possible to secure excellent resilience in the secondary battery electrolyte while maintaining rubber properties.

The aromatic vinyl-based monomer (b2) may be one or more selected from the group consisting of styrene, $\alpha$-methylstyrene, 2-methylstyrene, 3-methylstyrene, 4-methylstyrene, 2,4-dimethylstyrene, 2,4-diisopropylstyrene, 4-propylstyrene, 4-cyclohexylstyrene, 4-(p-methylphenyl)styrene, 5-tert-butyl-2-methylstyrene, tert-butoxystyrene, 2-tert-butylstyrene, 3-tert-butylstyrene, 4-tert-butylstyrene, N,N-dimethylaminoethylstyrene, 1-vinyl-5-hexylnaphthalene, 1-vinylnaphthalene, divinylnaphthalene, divinylbenzene, trivinylbenzene, vinylbenzyldimethylamine, (4-vinylbenzyl)dimethylaminoethyl ether, vinylpyridine, vinylxylene, diphenylethylene, and halogen-substituted styrene, but is not limited thereto.

A content of the aromatic vinyl-based monomer (b2) may be 20 to 40% by weight based on 100% by weight of the styrene-butadiene-based rubber. For example, the content may be 20% by weight, 21% by weight, 22% by weight, 23% by weight, 24% by weight, 25% by weight, 26% by weight, 27% by weight, 28% by weight, 29% by weight, 30% by weight, 31% by weight, 32% by weight, 33% by weight, 34% by weight, 35% by weight, 36% by weight, 37% by weight, 38% by weight, 39% by weight, 40% by weight, or a value between two of these values. When the content of the aromatic vinyl-based monomer (b2) satisfies the above range, it is possible to secure excellent resilience in the secondary battery electrolyte while maintaining rubber properties.

The alkyl ester-based monomer (b3) may be one or more selected from the group consisting of methyl methacrylate, ethyl methacrylate, butyl methacrylate, methyl acrylate, ethyl acrylate, and butyl acrylate, but is not limited thereto.

A content of the alkyl ester-based monomer (b3) may be 0 to 30% by weight based on 100% by weight of the styrene-butadiene-based rubber. For example, the content may be 0% by weight, 0.1% by weight, 0.2% by weight, 0.3% by weight, 0.4% by weight, 0.5% by weight, 0.6% by weight, 0.7% by weight, 0.8% by weight, 0.9% by weight, 1% by weight, 2% by weight, 3% by weight, 4% by weight, 5% by weight, 6% by weight, 7% by weight, 8% by weight, 9% by weight, 10% by weight, 11% by weight, 12% by weight, 13% by weight, 14% by weight, 15% by weight, 16% by weight, 17% by weight, 18% by weight, 19% by weight, 20% by weight, 21% by weight, 22% by weight, 23% by weight, 24% by weight, 25% by weight, 26% by weight, 27% by weight, 28% by weight, 29% by weight, 30% by weight, or a value between two of these values. When the content of the alkyl ester-based monomer (b3) satisfies the above range, it is possible to secure excellent resilience in the secondary battery electrolyte while maintaining rubber properties.

The ethylenically unsaturated acid monomer (b4) may include one or more selected from the group consisting of acrylic acid, methacrylic acid, itaconic acid, maleic acid, fumaric acid, maleic anhydride, citraconic anhydride, styrene sulfonic acid, monobutyl fumarate, monobutyl maleate, and mono-2-hydroxypropyl maleate, but is not limited thereto.

A content of the ethylenically unsaturated acid monomer (b4) may be 0 to 20% by weight based on 100% by weight of the styrene-butadiene-based rubber. For example, the content may be 0% by weight, 0.1% by weight, 0.2% by weight, 0.3% by weight, 0.4% by weight, 0.5% by weight, 0.6% by weight, 0.7% by weight, 0.8% by weight, 0.9% by weight, 1% by weight, 2% by weight, 3% by weight, 4% by weight, 5% by weight, 6% by weight, 7% by weight, 8% by weight, 9% by weight, 10% by weight, 11% by weight, 12% by weight, 13% by weight, 14% by weight, 15% by weight, 16% by weight, 17% by weight, 18% by weight, 19% by weight, 20% by weight, or a value between two of these values. When the content of the ethylenically unsaturated acid monomer (b4) satisfies the above range, it is possible to secure excellent resilience in the secondary battery electrolyte while maintaining rubber properties.

A weight ratio of the core and shell of the styrene-butadiene-based rubber may be 2:1 to 1:10, preferably 1:1 to 1:6, and more preferably 1:2 to 1:3. The core and shell differ in hydrophilicity, and because of this, the positions of the core and shell are reversed by the core-shell inversion phenomenon during emulsion polymerization. At this time, a relatively large hydrophilic core (and ultimately the shell) improves the adhesive strength between the current collector (copper sheet) and the active material, and a relatively small hydrophilic shell (and ultimately the core) improves resilience according to the inherent characteristics of the styrene-butadiene rubber. When the weight ratio of the core and shell of the styrene-butadiene-based rubber satisfies the above range, adhesive strength and resilience may be secured in a balanced manner.

In the present invention, there is no particular limitation on the method of preparing styrene-butadiene-based rubber with a core-shell structure, but for example, styrene-butadiene-based rubber with a core-shell structure may be prepared by polymerizing a core monomer mixture including (a1) a conjugated diene-based monomer, (a2) an aromatic vinyl-based monomer, (a3) an alkyl ester-based monomer, and (a4) an ethylenically unsaturated acid monomer including itaconic acid to prepare a copolymer core, and then polymerizing a shell monomer mixture including (b1) a conjugated diene-based monomer, (b2) an aromatic vinyl-based monomer, (b3) an alkyl ester-based monomer, and (b4) an ethylenically unsaturated acid monomer in the presence of the copolymer core to form a copolymer shell on the surface of the copolymer core.

The polymerization of the core monomer mixture and the polymerization of the shell monomer mixture may each be independently performed by emulsion polymerization, and the emulsion polymerization may be performed in the presence of an initiator, a reducing agent, an emulsifier, and a molecular weight adjusting agent.

As the initiator, a persulfate-based water-soluble initiator may be used, and for example, potassium persulfate, sodium persulfate, ammonium persulfate, and the like may be used, but is not limited thereto.

As the reducing agent, for example, sodium bisulfide, and the like may be used, but is not limited thereto.

As the emulsifier, a sulfate-based or sulfide-based anionic emulsifier may be used, and for example, sodium dodecyl benzene sulfonate (DBS-Na), sodium lauryl sulfate, sodium dodecyl diphenyl oxide disulfonate, and the like may be used, but is not limited thereto.

As the molecular weight adjusting agent, a mercaptan-based molecular weight adjusting agent may be used, and for example, t-dodecyl mercaptan, n-dodecyl mercaptan, and octyl mercaptan, and the like may be used, but is not limited thereto. The molecular weight and gel content of the copolymer may be adjusted by using the molecular weight adjusting agent.


Nitrile-butadiene-based rubber


In addition to reinforcing tensile strength and elongation characteristics, the nitrile-butadiene-based rubber forms a uniform film through interaction with styrene-butadiene-based rubber and maximizes resilience in the electrolyte of a secondary battery.

A gel content of the nitrile-butadiene-based rubber may be 15% or more, preferably 20% or more, more preferably 30% or more, even more preferably 40% or more, and most preferably 50% or more. When the gel content of the nitrile-butadiene-based rubber is outside the above range, deformation called swelling in the secondary battery electrolyte is maximized, which may limit the binder properties of the rubber (e.g., tensile strength, elongation, and resilience). A gel content may be measured in a toluene solvent at 25 °C.

The glass transition temperature (Tg) of the nitrile-butadiene-based rubber may be 20 °C or less, preferably 10 °C or less, more preferably 0 °C or less, and even more preferably -10 °C or less. When the Tg of the nitrile-butadiene-based rubber satisfies the above range, the binder properties of the rubber may be maximized.

According to one example, the nitrile-butadiene-based rubber may include a conjugated diene-based monomer, an ethylenically unsaturated nitrile monomer, an alkyl ester-based monomer, and an ethylenically unsaturated acid monomer.

The conjugated diene-based monomer may be one or more selected from the group consisting of 1,3-butadiene, 2,3-dimethyl-1,3-butadiene, 2-ethyl-1,3-butadiene, and 1,3-pentadiene, but is not limited thereto.

A content of the conjugated diene-based monomer may be 60 to 75% by weight based on 100% by weight of the nitrile-butadiene-based rubber. For example, the content may be 60% by weight, 61% by weight, 62% by weight, 63% by weight, 64% by weight, 65% by weight, 66% by weight, 67% by weight, 68% by weight, 69% by weight, 70% by weight, 71% by weight, 72% by weight, 73% by weight, 74% by weight, 75% by weight, or a value between two of these values. When the content of the conjugated diene-based monomer satisfies the above range, it is possible to maintain the physical properties of rubber in the secondary battery electrolyte.

The ethylenically unsaturated nitrile monomer may be one or more selected from the group consisting of acrylonitrile, methacrylonitrile, fumaronitrile, $\alpha$-chloronitrile, and $\alpha$-cyano ethyl acrylonitrile, but is not limited thereto.

A content of the ethylenically unsaturated nitrile monomer may be 20 to 40% by weight based on 100% by weight of the nitrile-butadiene-based rubber. For example, the content may be 20% by weight, 21% by weight, 22% by weight, 23% by weight, 24% by weight, 25% by weight, 26% by weight, 27% by weight, 28% by weight, 29% by weight, 30% by weight, 31% by weight, 32% by weight, 33% by weight, 34% by weight, 35% by weight, 36% by weight, 37% by weight, 38% by weight, 39% by weight, 40% by weight, or a range between two of these values. When the content of the ethylenically unsaturated nitrile monomer satisfies the above range, it is possible to maintain the physical properties of rubber in the secondary battery electrolyte.

The alkyl ester-based monomer may be one or more selected from the group consisting of methyl methacrylate, ethyl methacrylate, butyl methacrylate, methyl acrylate, ethyl acrylate, and butyl acrylate, but is not limited thereto.

A content of the alkyl ester-based monomer may be 0 to 10% by weight based on 100% by weight of the nitrile-butadiene-based rubber. For example, the content may be 0% by weight, 0.1% by weight, 0.2% by weight, 0.3% by weight, 0.4% by weight, 0.5% by weight, 0.6% by weight, 0.7% by weight, 0.8% by weight, 0.9% by weight, 1% by weight, 2% by weight, 3% by weight, 4% by weight, 5% by weight, 6% by weight, 7% by weight, 8% by weight, 9% by weight, 10% by weight, or a value between two of these values. When the content of the alkyl ester-based monomer satisfies the above range, it is possible to maintain the physical properties of rubber in the secondary battery electrolyte.

The ethylenically unsaturated acid monomer may include one or more selected from the group consisting of acrylic acid, methacrylic acid, itaconic acid, maleic acid, fumaric acid, maleic anhydride, citraconic anhydride, styrene sulfonic acid, monobutyl fumarate, monobutyl maleate, and mono-2-hydroxypropyl maleate, but is not limited thereto.

A content of the ethylenically unsaturated acid monomer may be 0 to 10% by weight based on 100% by weight of the nitrile-butadiene-based rubber. For example, the content may be 0% by weight, 0.1% by weight, 0.2% by weight, 0.3% by weight, 0.4% by weight, 0.5% by weight, 0.6% by weight, 0.7% by weight, 0.8% by weight, 0.9% by weight, 1% by weight, 2% by weight, 3% by weight, 4% by weight, 5% by weight, 6% by weight, 7% by weight, 8% by weight, 9% by weight, 10% by weight, or a value between two of these values. When the content of the ethylenically unsaturated acid monomer satisfies the above range, it is possible to maintain the physical properties of rubber in the secondary battery electrolyte.

In the present invention, there is no particular limitation on a method of preparing nitrile-butadiene-based rubber, and for example, the rubber may be prepared by emulsion polymerization like the styrene-butadiene-based rubber described above.

The binder for a secondary battery of the present invention may further include a cellulose-based water-soluble polymer. The cellulose-based water-soluble polymer may improve the binding force with the anode active material.

The cellulose-based water-soluble polymer may be one or more selected from the group consisting of cellulose derivatives such as carboxymethylcellulose, carboxyethylcellulose, methylcellulose, ethylcellulose, and hydroxyalkylcellulose, and their lithium salts, sodium salts, potassium ammonium salts, or metal salts, but is not limited thereto.

A weight ratio of the cellulose-based water-soluble polymer based on the total weight of the styrene-butadiene-based rubber and the nitrile-butadiene-based rubber may be 0.2 to 5, preferably 0.5 to 2, and more preferably 0.8 to 1.2. When the weight ratio of the cellulose-based water-soluble polymer based on the total weight of the styrene-butadiene-based rubber and the nitrile-butadiene-based rubber satisfies the above range, the effect of improving a binding force with the anode active material may be maximized.

## Anode mixture for secondary battery

Another aspect of the present invention provides an anode mixture for a secondary battery including the above-described binder for a secondary battery anode and an anode active material.

As the anode active material, for example, one or more selected from the group consisting of silicon, silicon oxide represented by the formula $SiO_x$ ($0.5 \leq x \leq 1.5$), silicon-based alloys, and mixtures of these with carbon-based materials may be used, but is not limited thereto.

The anode mixture for the secondary battery may further include conductive materials, fillers, and the like, as needed.

The conductive material is used to provide conductivity to the anode, and may be graphite such as natural graphite or artificial graphite; carbon black such as carbon black, acetylene black, ketjen black, channel black, furnace black, lamp black, and thermal black; conductive fibers such as carbon fibers and metal fibers; metal powders such as carbon fluoride, aluminum, and nickel powders; conductive whiskers such as zinc oxide and potassium titanate; conductive metal oxides such as titanium oxide; a conductive material such as a polyphenylene derivative; or a highly functional nano-carbon such as carbon nanotubes or graphene, but is not limited thereto.

The filler is used to suppress expansion of the anode, and as the filler, olefin-based polymers such as polyethylene and polypropylene; fibrous materials such as glass fiber and carbon fiber may be used, but is not limited thereto.

## Anode and secondary battery

Still another aspect of the present invention provides an anode including an anode mixture layer composed of the above-described anode mixture and an anode current collector layer, and a secondary battery including the same.

The anode may be manufactured by applying the above-described anode mixture on the anode current collector layer, and then drying and rolling the mixture.

The anode current collector layer may include, but is not limited to, copper, stainless steel, aluminum, nickel, titanium, copper, or alloys thereof.

The secondary battery includes the above-described anode, a cathode, and an electrolyte layer, and the cathode and electrolyte layer may include commonly known components.

Hereinafter, examples of this specification will be described in more detail. However, the following experimental results describe only representative experimental results among the examples, and the scope and content of the present invention may not be construed as being reduced or limited by the examples. Each effect of the various implementations of the present invention not explicitly presented below will be specifically described in the corresponding section.

Example 1

(1) Preparation of styrene-butadiene-based rubber with core-shell structure

A core monomer mixture consisting of 8 parts by weight of butadiene, 7.5 parts by weight of styrene, 3 parts by weight of methyl methacrylate, 5 parts by weight of acrylic acid, and 1.5 parts by weight of itaconic acid was input to a reaction vessel, and 1.2 parts by weight of potassium persulfate as an initiator, 0.4 parts by weight of sodium bisulfide as a reducing agent, 0.2 parts by weight of sodium dodecyl benzene sulfonate as an emulsifier, and 0.5 parts by weight of t-dodecyl mercaptan as a molecular weight adjusting agent were input to the reaction vessel. The mixture was reacted at a polymerization temperature of 55 °C for 1 hour to obtain a copolymer core.

In the presence of the copolymer core, a shell monomer mixture consisting of 32 parts by weight of butadiene, 29 parts by weight of styrene, 12.5 parts by weight of methyl methacrylate, and 1.5 parts by weight of acrylic acid was input, and 0.4 parts by weight of t-dodecyl mercaptan was input as a molecular weight adjusting agent. The mixture was reacted at a polymerization temperature of 60 °C for 3 hours and then at a polymerization temperature of 65 °C for 3 hours to form a copolymer shell on the surface of the copolymer core.

The copolymer shell on the surface of the copolymer core was left at a polymerization temperature of 70 °C for 4 hours, and then NaOH was added to adjust the pH to 5.0 to obtain styrene-butadiene-based rubber with a core-shell structure.

(2) Preparation of nitrile-butadiene-based rubber

A monomer mixture consisting of 68 parts by weight of butadiene, 29.5 parts by weight of acrylonitrile, 2 parts by weight of methyl methacrylate, and 0.5 parts by weight of acrylic acid was input to a reaction vessel, and 1.6 parts by weight of potassium persulfate as an initiator, 0.5 parts by weight of sodium bisulfide as a reducing agent, 0.3 parts by weight of sodium dodecyl benzene sulfonate as an emulsifier, and 0.2 parts by weight of t-dodecyl mercaptan as a molecular weight adjusting agent were input to the reaction vessel. The mixture was reacted at a polymerization temperature of 40 °C for 12 hours, and then NaOH was added to adjust the pH to 8.0 to obtain nitrile-butadiene-based rubber. A gel content of the prepared nitrile-butadiene-based rubber was 60%, and the Tg was -10 °C.

(3) Preparation of anode mixture

$SiO_2/C$ ($SiO_2$ 15%) with a theoretical capacity of 600 mAh/g as an anode active material and conductive carbon (Super-P) as a conductive material were prepared, and then 95 parts by weight of the anode active material, 4 parts by weight of the conductive material, 1.6 parts by weight of the core-shell structured styrene-butadiene-based rubber, 0.4 parts by weight of the nitrile-butadiene-based rubber, and 2 parts by weight of carboxymethyl cellulose were stirred and mixed in 150 parts by weight of water as a dispersion medium for 1 hour to obtain a slurry-type anode mixture.

(4) Manufacture of secondary battery

Copper foil was prepared as an anode current collector, and the anode mixture slurry was applied and dried on the anode current collector to manufacture an anode.

A cathode including commercially available NCM 523 ($Li(Ni_{0.5}Co_{0.2}Mn_{0.3})O$, L&F) as a cathode active material was prepared, a polyethylene-based separator was inserted and assembled between the anode and the cathode, and an electrolyte was injected to manufacture a 2032 coin cell (secondary battery). At this time, the electrolyte used was LiPF6 dissolved to a concentration of 1.15M in a mixed solvent of ethylene carbonate (EC) and ethyl methyl carbonate (EMC) (volume ratio of EC:EMC 3:7).

### Comparative Example 1

A secondary battery was manufactured in the same manner as in Example 1, except that nitrile-butadiene-based rubber was not input and 2.0 parts by weight of styrene-butadiene-based rubber with a core-shell structure was mixed in preparing the anode mixture.

### Comparative Example 2

A secondary battery was manufactured in the same manner as in Example 1, except that 0.8 parts by weight of nitrile-butadiene-based rubber was used and 1.2 parts by weight of styrene-butadiene-based rubber with a core-shell structure was mixed in preparing the anode mixture.

### Comparative Example 3

A secondary battery was manufactured in the same manner as in Example 1, except that 1.0 parts by weight of t-dodecyl mercaptan was input and a gel content of the nitrile-butadiene-based rubber was 10% or less in preparing the nitrile-butadiene-based rubber.

### Experimental Example

For the secondary batteries manufactured in Example 1 and Comparative Examples 1 to 3, 1.0C charging and 1.0C discharging were repeated at 25 °C to evaluate a capacity retention ratio (CRR). The capacity retention rate was calculated using the formula below, and the results are shown in the table below.

$$\text{Capacity retention ratio (\%)} = [\text{Discharge capacity at 50 cycles/Discharge capacity at 1 cycle}] \times 100$$

[Table 1]

|  | Example 1 | Comparative Example 1 | Comparative Example 2 | Comparative Example 3 |
|---|---|---|---|---|
| Capacity retention ratio (%) | 91 | 82 | 73 | 64 |

The adhesive strength between the current collector and the active material is mainly determined by the styrene-butadiene-based rubber with the core-shell structure, and the nitrile-butadiene-based rubber plays a role in supporting the resilience against expansion and contraction of the anode during charging and discharging. Referring to Table 1, it can be confirmed that the secondary battery of Example 1, which includes both a styrene-butadiene-based rubber with a core-shell structure and nitrile-butadiene-based rubber whose contents were appropriately controlled, had excellent resilience and adhesion, showing a high capacity retention ratio of 85% or more. On the other hand, in the case of Comparative Examples 1 to 3, nitrile-butadiene-based rubber was not included, the content of the nitrile-butadiene-based rubber was excessive compared to the styrene-butadiene-based rubber, or the gel content of the nitrile-butadiene-based rubber was low, and thus resilience and adhesive strength were reduced, resulting in a low capacity retention ratio of less than 85%.

According to the present invention, it is possible to provide a binder for a secondary battery anode that can implement a secondary battery with high capacity, high performance, and a long life.

The effects of the present invention are not limited to the above-described effect and should be understood to include all effects that can be inferred from the configuration described in the detailed description or claims of the present specification.

The description of the present specification described above is for illustrative purposes, and it should be understood that those of ordinary skill in the art to which one aspect of the present specification belongs can easily modify it into other specific forms without changing the technical idea or essential features described in this specification. Therefore, it should be understood that the embodiments described above are illustrative in all respects and not restrictive. For example, each component described as a single type may be implemented in a distributed form, and likewise components described as distributed may be implemented in a combined form.

The scope of the present specification is indicated by the following claims, and all changes or modifications derived from the meaning and scope of the claims and their equivalents should be construed as being included in the scope of the present specification.

**Claims**

1.  A binder for a secondary battery anode, comprising:

    styrene-butadiene-based rubber with a core-shell structure; and
    nitrile-butadiene-based rubber with a gel content of 15% or more,
    wherein a weight ratio of the styrene-butadiene-based rubber and the nitrile-butadiene-based rubber is 65:35 to 99:1.

2.  The binder of claim 1, wherein a weight ratio of the styrene-butadiene-based rubber and the nitrile-butadiene-based rubber is 75:25 to 85:15.

3.  The binder of claim 1 or 2, wherein a core of the styrene-butadiene-based rubber includes, based on 100% by weight of the styrene-butadiene-based rubber:

    (a1) 5 to 15% by weight of a conjugated diene-based monomer;
    (a2) 5 to 15% by weight of an aromatic vinyl-based monomer;
    (a3) 0 to 20% by weight of an alkyl ester-based monomer; and
    (a4) 0.1 to 20% by weight of an ethylenically unsaturated acid monomer including itaconic acid.

4.  The binder of one of claims 1 to 3, wherein a shell of the styrene-butadiene-based rubber includes, based on 100% by weight of the styrene-butadiene-based rubber:

    (b1) 10 to 40% by weight of a conjugated diene-based monomer;
    (b2) 20 to 40% by weight of an aromatic vinyl-based monomer;
    (b3) 0.1 to 30% by weight of an alkyl ester-based monomer; and
    (b4) 0 to 20% by weight of an ethylenically unsaturated acid monomer.

5.  The binder of one of claims 1 to 4, wherein the nitrile-butadiene-based rubber includes, based on 100% by weight of the nitrile-butadiene-based rubber:

    60 to 75% by weight of a conjugated diene-based monomer;
    20 to 40% by weight of an ethylenically unsaturated nitrile monomer;
    0 to 10% by weight of an alkyl ester-based monomer; and
    0 to 10% by weight of an ethylenically unsaturated acid monomer.

6.  The binder of one of claims 1 to 5, wherein a gel content of the nitrile-butadiene-based rubber is 50% or more.

7.  The binder of one of claims 1 to 6, wherein the nitrile-butadiene-based rubber has a glass transition temperature (Tg) of 20 °C or less.

8.  The binder of one of claims 1 to 7, further comprising a cellulose-based water-soluble polymer, wherein the cellulose-based water-soluble polymer is one or more selected from the group consisting of carboxymethylcellulose and salts thereof, carboxyethylcellulose and salts thereof, methylcellulose and salts thereof, ethylcellulose and salts thereof, and hydroxyalkylcellulose and salts thereof.

9.  The binder of claim 8, wherein a weight ratio of the cellulose-based water-soluble polymer is 0.5 to 2 based on the total weight of the styrene-butadiene-based rubber and the nitrile-butadiene-based rubber.

10. The binder of any one of claims 3 to 5, wherein the conjugated diene-based monomer is one or more selected from the group consisting of 1,3-butadiene, 2,3-dimethyl-1,3-butadiene, 2-ethyl-1,3-butadiene, and 1,3-pentadiene,

    wherein the ethylenically unsaturated acid monomer is one or more selected from the group consisting of acrylic acid, methacrylic acid, itaconic acid, maleic acid, fumaric acid, maleic anhydride, citraconic anhydride, styrene sulfonic acid, monobutyl fumarate, monobutyl maleate, and mono-2-hydroxypropyl maleate,

wherein the alkyl ester-based monomer is one or more selected from the group consisting of methyl methacrylate, ethyl methacrylate, butyl methacrylate, methyl acrylate, ethyl acrylate, and butyl acrylate.

11. The binder of claim 3 or 4, wherein the aromatic vinyl-based monomer is one or more selected from the group consisting of styrene, α-methylstyrene, 2-methylstyrene, 3-methylstyrene, 4-methylstyrene, 2,4-dimethylstyrene, 2,4-diisopropylstyrene, 4-propylstyrene, 4-cyclohexylstyrene, 4-(p-methylphenyl)styrene, 5-tert-butyl-2-methylstyrene, tert-butoxystyrene, 2-tert-butylstyrene, 3-tert-butylstyrene, 4-tert-butylstyrene, N,N-dimethylaminoethylstyrene, 1-vinyl-5-hexylnaphthalene, 1-vinylnaphthalene, divinylnaphthalene, divinylbenzene, trivinylbenzene, vinylbenzyldimethylamine, (4-vinylbenzyl)dimethylaminoethyl ether, vinylpyridine, vinylxylene, diphenylethylene, and halogen-substituted styrene.

12. The binder of claim 5, wherein the ethylenically unsaturated nitrile monomer is one or more selected from the group consisting of acrylonitrile, methacrylonitrile, fumaronitrile, α-chloronitrile, and α-cyano ethyl acrylonitrile.

13. An anode mixture for a secondary battery, comprising:

the binder for a secondary battery anode of any one of claims 1 to 9; and
an anode active material,
wherein the anode active material is one or more selected from the group consisting of silicon, silicon oxide represented by the formula $SiO_x$ ($0.5 \leq x \leq 1.5$), silicon-based alloys, and mixtures of these with carbon-based materials.

14. An anode comprising:

an anode mixture layer composed of the anode mixture of claim 13; and
an anode current collector layer.

15. A secondary battery comprising the anode of claim 14; a cathode; and an electrolyte layer.

Europäisches
Patentamt

European
Patent Office

Office européen
des brevets

# EUROPEAN SEARCH REPORT

Application Number

EP 23 20 6078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/239239 A1 (CHA JUN-KYU [KR] ET AL) 28 August 2014 (2014-08-28) <br> * abstract * <br> * paragraphs [0009] – [0011] * <br> * paragraphs [0109] – [0112] * <br> * paragraphs [0158] – [0165] * <br> * claims 1-10 * <br> ----- | 1-15 | INV. <br> H01M4/62 <br> H01M10/0525 |
| A | JP 2020 084162 A (NIPPON ZEON CO) 4 June 2020 (2020-06-04) <br> * abstract * <br> * examples 1-5 * <br> * claims 1-4 * <br> ----- | 1-15 | |
| A | KR 2014 0112282 A (SAMSUNG SDI CO LTD [KR]) 23 September 2014 (2014-09-23) <br> * abstract * <br> * paragraphs [0071] – [0078] * <br> ----- | 1-15 | |
| | | | TECHNICAL FIELDS SEARCHED (IPC) <br><br> H01M |

The present search report has been drawn up for all claims

| Place of search | Date of completion of the search | Examiner |
|---|---|---|
| Munich | 26 March 2024 | Stachowiak, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 20 6078

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2024

| Patent document cited in search report | Publication date | Patent family member(s) | Publication date |
|---|---|---|---|
| US 2014239239 A1 | 28-08-2014 | NONE | |
| JP 2020084162 A | 04-06-2020 | NONE | |
| KR 20140112282 A | 23-09-2014 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20220141785